# EUROPÄISCHE PATENTANMELDUNG

(11) **EP 3 184 351 A1**
(43) Veröffentlichungstag der Anmeldung: **28.06.2017**
(21) Anmeldenummer: 15201975.8
(22) Anmeldetag: 22.12.2015
(51) Int. Cl.: B60L 9/28, B60L 11/08, B60L 5/36, B60L 5/38

(54) **ENERGIEVERSORGUNGSSYSTEM ZUR VERWENDUNG IN EINEM MINENFAHRZEUG UND MINENFAHRZEUG**

(71) Anmelder: Siemens Aktiengesellschaft, 80333 München (DE)
(72) Erfinder: Meinert, Michael, 91056 Erlangen (DE); Melzer, Michael, 91207 Lauf an der Pegnitz (DE); Fodor, Dan Niculae, 91227 Leinburg-Entenberg (DE); Lübben, Edzard, 91056 Erlangen (DE)

(57) **Zusammenfassung**

Die Erfindung betrifft ein Minenfahrzeug (1) mit einem Energieversorgungssystem (5) mit wenigstens einem elektrischen Fahrmotor (3). Das Energieversorgungssystem (5) umfasst wenigstens einen Traktionsstromrichter (17), mit dem wenigstens einem Fahrmotor (3) elektrische Energie zuführbar ist, und ein Fahrleitungssystem (11), über das wenigstens ein Fahrmotor (3) durch eine fahrzeugextern erzeugte Versorgungswechselspannung antreibbar ist.

## Beschreibung

Die Erfindung betrifft ein Energieversorgungssystem eines Minenfahrzeugs.

Übliche Minenfahrzeuge mit sehr großen Ladekapazitäten fahren angetrieben durch Diesel-elektrische Antriebssysteme mit einem Verbrennungsmotor und einem von dem Verbrennungsmotor angetriebenen Wechselstromgenerator, der das elektrische Antriebssystem des Fahrmotors versorgt, und teilweise an Gleichspannungsoberleitungen. Gleichspannungsoberleitungen sind jedoch nur in wenigen Minen vorhanden. Voll beladen bergauf können nur sehr geringe Geschwindigkeiten erreicht werden, wenn ausschließlich die von dem Diesel-elektrischen Antriebssystem generierte elektrische Energie für den Fahrantrieb verwendet wird. Voll beladen bergab können ebenfalls nur geringe Geschwindigkeiten realisiert werden, da die elektrischen Antriebsmotoren und die Bremswiderstände leistungsmäßig begrenzt sind.

Der Erfindung liegt die Aufgabe zugrunde, ein verbessertes Energieversorgungssystem eines Minenfahrzeugs anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Energieversorgungssystem eines Minenfahrzeugs mit wenigstens einem elektrischen Fahrmotor umfasst wenigstens einen Traktionsstromrichter, mit dem wenigstens einem Fahrmotor elektrische Energie zuführbar ist, und ein Fahrleitungssystem, über das wenigstens ein Fahrmotor durch eine fahrzeugextern erzeugte Versorgungswechselspannung antreibbar ist.

Die Erfindung sieht also vor, wenigstens einen Fahrmotor eines Minenfahrzeugs mit Wechselspannung eines Fahrleitungssystems zu versorgen. Gegenüber einer Versorgung mit einer Gleichspannung eines Fahrleitungssystems hat die Versorgung mit Wechselspannung den Vorteil, dass die bei einer Versorgung mit Gleichspannung erforderlichen großen und schweren Netzinduktivitäten eingespart werden können, wodurch das Gewicht des Minenfahrzeugs reduziert werden kann und Bauraum für die Netzinduktivitäten eingespart bzw. zur Erweiterung der Ladekapazität des Minenfahrzeugs oder zur Integration von Energiespeichersystemen verwendet werden kann. Die Verwendung einer Versorgungswechselspannung statt einer Versorgungsgleichspannung reduziert ferner die Entstehung von Lichtbögen an dem Fahrleitungssystem und reduziert dadurch dessen Verschleiß.

Eine Ausgestaltung der Erfindung sieht vor, dass das Fahrleitungssystem über einen Kopplungsstromrichter und einen dem Kopplungsstromrichter nachgeschalteten Gleichspannungszwischenkreis mit wenigstens einem als Wechselrichter ausgebildeten Traktionsstromrichter elektrisch verbindbar ist. Dabei kann der Kopplungsstromrichter als Einspeise-Rückspeise-Stromrichter ausgebildet sein, mit dem elektrische Energie aus dem Gleichspannungszwischenkreis in das Fahrleitungssystem rückspeisbar ist. Ferner kann wenigstens ein Bremssteller für einen Fahrmotor in den Gleichspannungszwischenkreis integriert sein.

Der Gleichspannungszwischenkreis ermöglicht dabei vorteilhaft, über einen Zwischenkreiskondensator elektrische Energie zwischenzuspeichern. Ein als Einspeise-Rückspeise-Stromrichter ausgebildeter Kopplungsstromrichter ermöglicht vorteilhaft, Bremsenergie von Fahrmotoren, z. B. bei einem Bremsen oder Bergabfahrten des Minenfahrzeugs, zur Spannungsstützung in das Fahrleitungssystem rückzuspeisen.

Weitere Ausgestaltungen der Erfindung sehen vor, dass das Fahrleitungssystem über eine induktive Kopplung, beispielsweise eine Entkopplungsinduktivität, eine Netzinduktivität bei Gleichspannungseinspeisung oder einen Transformator bei ein- oder dreiphasiger Wechselstromspeisung, mit wenigstens einem Traktionsstromrichter verbindbar ist, und/oder dass das Fahrleitungssystem eine Oberleitung und/oder eine Stromschiene, die auch als Stromschienenoberleitung ausgeführt sein kann, aufweist, und/oder dass die Versorgungswechselspannung dreiphasig oder einphasig ist.

Fahrleitungssysteme mit einer Oberleitung können sowohl für Schienenfahrzeuge als auch für nicht schienengeführte Minenfahrzeuge eingesetzt werden. Fahrleitungssysteme mit einer Stromschiene eignen sich für schienengeführte Minenfahrzeuge. Die Verwendung einer dreiphasigen Versorgungswechselspannung hat den Vorteil, dass das übergeordnete Wechselspannungsnetz symmetrisch belastet wird, was beispielsweise bei Verwendung einer einphasigen Versorgungswechselspannung relativ schwierig und aufwändig realisierbar ist.

Eine weitere Ausgestaltung der Erfindung sieht einen Verbrennungsmotor des Minenfahrzeugs und einen von dem Verbrennungsmotor angetriebenen Wechselstromgenerator, von dem wenigstens ein Fahrmotor mit einer Generatorwechselspannung angetrieben ist, vor. Die Versorgungswechselspannung und die Generatorwechselspannung weisen dabei vorzugsweise etwa gleich große Effektivwerte auf. Ferner sind der Wechselstromgenerator und das Fahrleitungssystem beispielsweise über denselben Kopplungsstromrichter und Gleichspannungszwischenkreis mit wenigstens einem als Wechselrichter ausgebildeten Traktionsstromrichter elektrisch verbindbar. Außerdem ist vorzugsweise eine Schaltanordnung vorgesehen, mit der das Fahrleitungssystem und der Wechselstromgenerator unabhängig voneinander mit wenigstens einem Traktionsstromrichter elektrisch verbindbar sind.

Die vorgenannten Ausgestaltungen der Erfindung ermöglichen, das Minenfahrzeug wahlweise mit dem Verbrennungsmotor, dem Fahrleitungssystem oder dem Verbrennungsmotor und dem Fahrleitungssystem anzutreiben. Dadurch können die Antriebsart und Antriebsleistung vorteilhaft den jeweiligen Anforderungen angepasst werden. Beispielsweise können zur Erzielung hoher Geschwindigkeiten oder bei Bergauffahrten der Verbrennungsmotor und das Fahrleitungssystem eingesetzt werden, während beispielsweise bei langsamen Fahrten oder Bergabfahrten ganz auf einen Antrieb durch den Verbrennungsmotor verzichtet werden kann.

Eine Auslegung der Versorgungswechselspannung auf einen Effektivwert, der etwa so groß wie der Effektivwert der Generatorwechselspannung ist, ermöglicht, dass die Versorgungswechselspannung und die Generatorwechselspannung mit demselben Kopplungsstromrichter gleichgerichtet werden, ohne die Versorgungswechselspannung vorher mit einem Transformator zu transformieren. Es ist also auf dem Minenfahrzeug kein schwerer Transformator erforderlich, um die Versorgungswechselspannung zu transformieren. Dadurch werden vorteilhaft Gewicht und Bauraum des Minenfahrzeugs eingespart.

Ein erfindungsgemäßes Minenfahrzeug weist ein erfindungsgemäßes Energieversorgungssystem mit den oben genannten Vorteilen auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit einer Zeichnung näher erläutert wird.

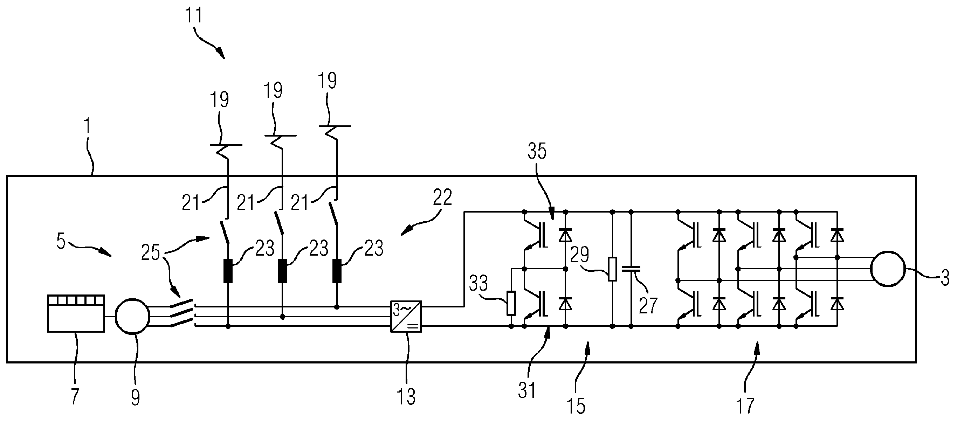

Dabei zeigt die einzige Figur schematisch ein Minenfahrzeug 1 mit einem elektrischen Fahrmotor 3 und ein Energieversorgungssystem 5 des Minenfahrzeugs 1.

Das Energieversorgungssystem 5 umfasst einen Verbrennungsmotor 7 des Minenfahrzeugs 1, beispielsweise einen Dieselmotor, einen von dem Verbrennungsmotor 7 angetriebenen Wechselstromgenerator 9, ein Fahrleitungssystem 11, einen Kopplungsstromrichter 13, einen Gleichspannungszwischenkreis 15 mit Zwischenkreiskondensator 27 und einen Traktionsstromrichter 17.

Das Fahrleitungssystem 11 dieses Ausführungsbeispiels ist ein Oberleitungsnetz mit einer Oberleitung 19 zur Versorgung des Minenfahrzeugs 1 mit einer dreiphasigen Versorgungswechselspannung. Die Versorgungswechselspannung des Oberleitungsnetzes ist über mit der Oberleitung 19 verbundene Stromabnehmer 21 an den Kopplungsstromrichter 13 anlegbar. Optional ist das Fahrleitungssystem 11 über eine induktive Kopplung 22 mit dem Traktionsstromrichter 17 über den Kopplungsstromrichter 13 und den Gleichspannungszwischenkreis 15 elektrisch verbunden. Die induktive Kopplung 22 wird in diesem Ausführungsbeispiel von Entkopplungsinduktivitäten 23 gebildet, die jeweils einen Stromabnehmer 21 mit dem Kopplungsstromrichter 13 elektrisch verbinden.

Mit dem Wechselstromgenerator 9 ist eine dreiphasige Generatorwechselspannung erzeugbar, die ebenfalls an den Kopplungsstromrichter 13 anlegbar ist.

Mit einer Schaltanordnung 25 sind das Fahrleitungssystem 11 und der Wechselstromgenerator 9 unabhängig voneinander mit dem Kopplungsstromrichter 13 elektrisch verbindbar, so dass entweder nur die Versorgungswechselspannung oder nur die Generatorwechselspannung oder sowohl die Versorgungswechselspannung als auch die Generatorwechselspannung oder weder die Versorgungswechselspannung noch die Generatorwechselspannung an den Kopplungsstromrichter 13 anliegt.

Der Gleichspannungszwischenkreis 15 verbindet den Kopplungsstromrichter 13 elektrisch mit dem Traktionsstromrichter 17, wobei der Kopplungsstromrichter 13 die ihm angelegte Versorgungswechselspannung und/oder Generatorwechselspannung in eine Zwischenkreisgleichspannung des Gleichspannungszwischenkreises 15 umwandelt. Der Traktionsstromrichter 17 ist als ein Stromrichter, beispielsweise als ein Wechselrichter ausgebildet, der die Zwischenkreisgleichspannung in eine Antriebswechselspannung für den Fahrmotor 3 umwandelt.

Der Gleichspannungszwischenkreis 15 umfasst einen Zwischenkreiskondensator 27, einen Zwischenkreiswiderstand 29 und einen Bremssteller 31, die elektrisch parallel zueinander geschaltet sind und an denen jeweils die Zwischenkreisgleichspannung anliegt. Der Bremssteller 31 dient dem Bremsen des Fahrmotors 3 und umfasst einen Bremswiderstand 33 und eine damit verbundene Bremssteller-Leistungselektronik 35.

Die Versorgungswechselspannung des Fahrleitungssystems 11 wird derart gewählt, dass ihr Effektivwert etwa so groß wie ein Effektivwert der von dem Wechselstromgenerator 9 erzeugten Generatorwechselspannung ist. Beispielsweise weist die Versorgungswechselspannung einen Effektivwert in einem Bereich von 1,3 kV bis 1,4 kV auf. Dann können die Versorgungswechselspannung und die Generatorwechselspannung mit dem Kopplungsstromrichter 13 gleichgerichtet werden, ohne die Versorgungswechselspannung vorher mit einem Transformator zu transformieren. Es ist also auf dem Minenfahrzeug 1 kein schwerer Transformator erforderlich, um die Versorgungswechselspannung zu transformieren. Dadurch werden vorteilhaft Gewicht und Bauraum des Minenfahrzeugs 1 eingespart.

Der Kopplungsstromrichter 13 kann als ein Einspeise-Rückspeise-Stromrichter, beispielsweise als eine B6-Brücke oder als so genanntes Active Front End (beispielsweise zur Rückspeisung von Energie oder zwecks Zwischenkreisspannungsregelungsmöglichkeit und/oder Regelung des Wechselstromgenerators 9), ausgebildet sein, mit dem elektrische Energie aus dem Gleichspannungszwischenkreis 15 in das Fahrleitungssystem 11 einspeisbar ist. Dadurch kann Bremsenergie des Fahrmotors 3, z. B. bei einem Bremsen oder Bergabfahrten, zur Spannungsstützung in das Fahrleitungssystem 11 rückgespeist werden.

Obwohl die Erfindung im Detail durch ein bevorzugtes Ausführungsbeispiel näher illustriert und beschrieben wurde, so ist die Erfindung nicht durch das offenbarte Beispiel eingeschränkt und Variationen des Ausführungsbeispiels können vom Fachmann hieraus abgeleitet werden, ohne den Schutzumfang der Erfindung zu verlassen.

## Patentansprüche

1. Energieversorgungssystem (5) eines Minenfahrzeugs (1) mit wenigstens einem elektrischen Fahrmotor (3), das Energieversorgungssystem (5) umfassend
- wenigstens einen Traktionsstromrichter (17), mit dem wenigstens einem Fahrmotor (3) elektrische Energie zuführbar ist,
- und ein Fahrleitungssystem (11), über das wenigstens ein Fahrmotor (3) durch eine fahrzeugextern erzeugte Versorgungswechselspannung antreibbar ist.

2. Energieversorgungssystem (5) nach Anspruch 1,
**dadurch gekennzeichnet, dass** das Fahrleitungssystem (11) über einen Kopplungsstromrichter (13) und einen dem Kopplungsstromrichter (13) nachgeschalteten Gleichspannungszwischenkreis (15) mit wenigstens einem als Wechselrichter ausgebildeten Traktionsstromrichter (17) elektrisch verbindbar ist.

3. Energieversorgungssystem (5) nach Anspruch 2,
**dadurch gekennzeichnet, dass** der Kopplungsstromrichter (13) als Einspeise-Rückspeise-Stromrichter ausgebildet ist, mit dem elektrische Energie aus dem Gleichspannungszwischenkreis (15) in das Fahrleitungssystem (11) rückspeisbar ist.

4. Energieversorgungssystem (5) nach Anspruch 2 oder 3, **gekennzeichnet durch** wenigstens einen in den Gleichspannungszwischenkreis (15) integrierten Bremssteller (31) für einen Fahrmotor (3).

5. Energieversorgungssystem (5) nach einem der vorhergehenden Ansprüche,
**gekennzeichnet durch** eine induktive Kopplung (22), über die das Fahrleitungssystem (11) mit wenigstens einem Traktionsstromrichter (17) verbindbar ist.

6. Energieversorgungssystem (5) nach einem der vorhergehenden Ansprüche,
**dadurch gekennzeichnet, dass** das Fahrleitungssystem (11) wenigstens eine Oberleitung (19) aufweist.

7. Energieversorgungssystem (5) nach einem der vorhergehenden Ansprüche,
**dadurch gekennzeichnet, dass** das Fahrleitungssystem (11) wenigstens eine Stromschiene aufweist.

8. Energieversorgungssystem (5) nach Anspruch 7,
**dadurch gekennzeichnet, dass** wenigstens eine Stromschiene als Stromschienenoberleitung ausgeführt ist.

9. Energieversorgungssystem (5) nach einem der vorhergehenden Ansprüche,
**dadurch gekennzeichnet, dass** die Versorgungswechselspannung dreiphasig ist.

10. Energieversorgungssystem (5) nach einem der Ansprüche 1 bis 8,
**dadurch gekennzeichnet, dass** die Versorgungswechselspannung einphasig ist

11. Energieversorgungssystem (5) nach einem der vorhergehenden Ansprüche,
**gekennzeichnet durch** einen Verbrennungsmotor (7) des Minenfahrzeugs (1) und einen von dem Verbrennungsmotor (7) angetriebenen Wechselstromgenerator (9), von dem wenigstens ein Fahrmotor (3) mit einer Generatorwechselspannung antreibbar ist.

12. Energieversorgungssystem (5) nach Anspruch 11,
**dadurch gekennzeichnet, dass** die Versorgungswechselspannung und die Generatorwechselspannung etwa gleich große Effektivwerte aufweisen.

13. Energieversorgungssystem (5) nach Anspruch 11 oder 12, wenn rückbezogen auf Anspruch 2,
**dadurch gekennzeichnet, dass** der Wechselstromgenerator (9) über den Kopplungsstromrichter (13) und den Gleichspannungszwischenkreis (15) mit wenigstens einem als Wechselrichter ausgebildeten Traktionsstromrichter (17) elektrisch verbindbar ist.

14. Energieversorgungssystem (5) nach einem der Ansprüche 11 bis 13,
**gekennzeichnet durch** eine Schaltanordnung (25), mit der das Fahrleitungssystem (11) und der Wechselstromgenerator (9) unabhängig voneinander mit wenigstens einem Traktionsstromrichter (17) elektrisch verbindbar sind.

15. Minenfahrzeug (1) mit einem Energieversorgungssystem (5) nach einem der vorhergehenden Ansprüche.
